# EUROPEAN PATENT APPLICATION

(11) **EP 3 744 585 A1**
(43) Date of publication of application: **02.12.2020**
(21) Application number: 19177429.8
(22) Date of filing: 29.05.2019
(51) Int. Cl.: B60S 1/34, F16C 33/08

(54) **PIVOT HOUSING ASSEMBLY WITH TAPERED BUSHINGS**

(71) Applicant: Valeo Systèmes d'Essuyage, 78322 Le Mesnil Saint Denis (FR)
(72) Inventor: SPIECHA, Daniel, 32 050 SKAWINA (PL); TOPOLSKI, Daniel, 32 050 SKAWINA (PL); SPOLITAKIEWICZ, Marek, 32 050 SKAWINA (PL)
(74) Representative: Valeo Vision

(57) **Abstract**

The invention concerns a pivot housing assembly (46), particularly for a windshield wiper system (20), comprising:
- a pivot housing (49) having a sleeve portion (48) comprising a through bore (51) in which a pivot shaft (44) is intended to be inserted, the bore (51) having a main axis (A) and an internal face (52) ;
- two bushings (60) which are received in the two axial ends of the through bore (51) and in which the pivot shaft (44) is intended to be journaled, each bushing (60) having an internal guiding face (62) presenting a right circular cylindrical shape parallel to the main axis (A) ;
characterized in that the internal face (52) of the bore (51) presents two convergent sections (52A, 52B) extending from each end towards the other end of the bore (51), each bushing (60) presenting a tapered external face (66) matching the convergent shape of the associated convergent section (52A, 52B) of the bore (51).

## Description

### TECHNICAL FIELD OF THE INVENTION

The present invention relates, generally, to windshield wiper systems, and more specifically, to a pivot housing for a windshield wiper system which is easier and cheaper to manufacture.

### BACKGROUND OF THE INVENTION

Conventional windshield wiper systems known in the related art include some type of wiper assembly mounted to a wiper arm which, in turn, is mounted adjacent the windshield and pivotally driven to impart reciprocal motion to the wiper blade assembly across the windshield. A rubber wiping element is supported by the wiper assembly and contacts the windshield across the surface to be wiped. In addition, these windshield wiper systems include a linkage assembly interposed between an electrical wiper motor and the wiper arms for translating rotational movement of the motor into pivotal movement of the wiper arm across the windshield. The windshield wiper systems include a connection between the linkage assembly and the wiper arm.

The wiper arm is mounted on a pivot shaft which is journaled in a pivot housing. The pivot housing comprises a sleeve having a through bore in which bushings are fitted. The bushings present the shape of a section of a circular tube.

The pivot housing is generally realized by a casting or molding process. When the pivot housing exits from the mold, an internal face of the bore presents a draft angle. The internal face is rectified by a machining operation (e.g. boring) before the insertion of the bushings so that the shape of the internal wall presents the shape of a circular right cylinder adapted to the shape of the bushings.

However, this machining operation requires time and may be costly to execute, especially in high-volume production.

### SUMMARY OF THE INVENTION

The invention concerns a pivot housing assembly, particularly for a windshield wiper system, comprising:
- a pivot housing having a sleeve portion comprising a through bore in which a pivot shaft is intended to be inserted, the bore having a main axis and an internal face ;
- two bushings which are received in the two axial ends of the through bore and in which the pivot shaft is intended to be journaled, each bushing having an internal guiding face presenting a right circular cylindrical shape parallel to the main axis.

The pivot housing assembly is characterized in that the internal face of the bore presents two convergent sections extending from each end towards the other end of the bore, each bushing presenting a tapered external face matching the convergent shape of the associated convergent section of the bore.

Embodiments of the pivot housing assembly according to the invention may also include one or more of the following features:
- each bushing has a flange at one end which forms a thrust face against an axial end face of the sleeve portion;
- the bushing is made of plastic material;
- the sleeve portion is realized by a molding process, the internal face of each convergent section of the bore presenting a draft angle directly issued from the molding process;
- the convergent sections of the internal face of the bore meet each other in the bore;
- at least the sleeve portion is fabricated from a thermoplastic or thermoset resin material, aluminium, or zinc;
- the pivot housing is made in one piece.

The invention also concerns a wiper system comprising a pivot housing assembly according to the teachings of the invention, characterized in that it comprises a pivot shaft which is inserted in the bore and journaled in the bushings, a crank being coupled to a first end section of the pivot shaft projecting outward of the bore, while the other end of the pivot shaft is coupled to a wiper arm, the crank abutting axially against the flange of the adjacent bushing to block the axial displacement of the pivot shaft in a first direction relative to the sleeve portion.

Embodiments of the wiper system according to the invention may also include one or more of the following features:
- a second end section of the pivot shaft projects outward of the bore, the second end section comprising a washer which is fastened axially to the pivot shaft to block the axial displacement of the pivot shaft in a second direction relative to the sleeve portion;
- the washer is fastened to the pivot shaft by a circlip, the washer being interposed between the circlip and the flange of the adjacent bushing, a spring washer being axially interposed between the flange of the adjacent bushing and the washer;
- the washer is a lock washer internally serrated which is arranged directly next to the flange of the adjacent bushing;

The invention also concerns a method for manufacturing a pivot housing assembly according to the teachings of the invention, characterized in that the pivot housing is realized by a molding process during which the bore is obtained by two mold sections inserted axially inside the bore, the mold sections presenting a draft angle allowing the ejection of the mold sections axially from the bore, no machining operation being realized on the internal face of the bore before the insertion of the bushings in the bore.

### BRIEF DESCRIPTION OF THE DRAWINGS

Other features and advantages of the invention will be apparent from the following detailed description, including the drawings, in which:
- Figure 1 is a partial perspective view of the front of an automotive vehicle having a windshield wiper system including a pivot housing assembly realized according to the teachings of the invention;
- Figure 2 is a perspective exploded view of the pivot housing assembly and the pivot shaft realized according to a first embodiment of the invention;
- Figure 3 is a perspective view of the pivot housing assembly and the pivot shaft of the figure 2 in an assembled state;
- Figure 4 is a cross-sectional view of the pivot housing of the figure 3 along the axial cutting plane 4-4 showing the arrangement of the bushings in a bore of the pivot housing realized according to the first embodiment of the invention ;
- Figure 5 is a view similar to the view of figure 4 which shows only the pivot housing;
- Figure 6 and 7 are cross-sectional view of the pivot housing during its molding process;
- Figure 8 is a cross-sectional view of one bushing of the pivot housing assembly of the figure 4;
- Figure 9 is a plan view of a lock washer intended to be arrange on the pivot shaft to lock the pivot shaft in the pivot housing according to a second embodiment of the invention ;
- Figure 10 is a cross-sectional view of the pivot shaft in the pivot housing locked in position by the lock washer illustrated on figure 9.

### DETAILED DESCRIPTION OF THE DRAWINGS

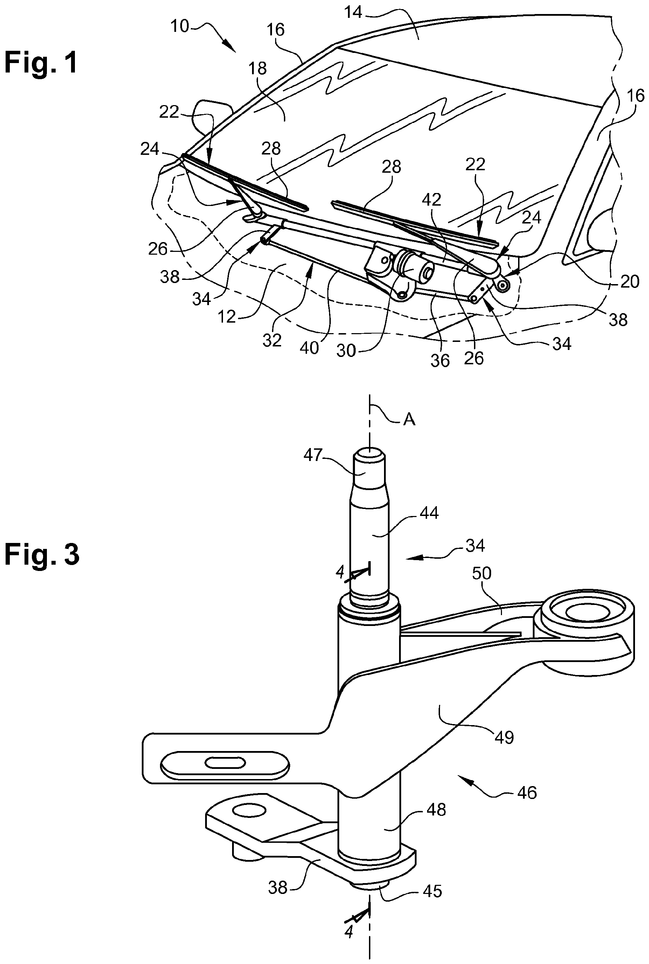

Referring now to the figures, where like numerals are used to designate like structure, a portion of a vehicle is illustrated at 10 in FIG. 1. The vehicle body includes a cowl 12, a roof 14, and a pair of laterally spaced front pillars 16 extending between the roof 14 and the cowl 12. The pillars 16, roof 14, and cowl 12 cooperate to define a generally rectangular perimeter, which supports a windshield 18.

A windshield wiper system, according to the present invention, is generally indicated at 20 in FIG. 1 and is employed to clean the glass windshield 18. The windshield wiper system 20 includes a pair of wiper assemblies 22, which correspond to the driver and passenger side of the vehicle 10. Each wiper assembly 22 is carried by a corresponding wiper arm assembly 24. The wiper arm assembly 24 includes a wiper arm 26 having one end with an attachment member (not shown but generally known in the art) adapted to operatively engage a wiper assembly 22 and another end pivotally mounted to a linkage assembly, as will be described in greater detail below. The wiper arm assembly 24 is adapted to facilitate the oscillating movement of the wiper assembly 22 across the windshield 18 to clean the windshield 18. The remaining components of the wiper system 20 are not visible from the exterior of the vehicle 10. Rather, the remaining components are generally located within the engine compartment and concealed by the cowl 12 or other portions of the vehicle body.

While the wiper assembly 22 illustrated in FIG. 1 is shown in connection with the front windshield 18 of the vehicle 10, those having ordinary skill in the art will appreciate that wiper assemblies 22 may be employed in other areas of a vehicle 10, such as a rear window (not shown) or a head lamp (not shown) that employs a wiper system 20. Thus, it will be understood that the present invention is not limited for use solely in connection with wiper arm assemblies 24 and windshield wiper assemblies 22 adapted for use on a vehicle's windshield 18, but for use in all applications where wiper arm assemblies 24 and wiper assemblies 22 are employed.

Referring again to FIG. 1, the wiper system 20 further includes an electrical wiper motor 30 and a linkage assembly, generally indicated at 32. The linkage assembly 32 is interposed between the electrical wiper motor 30 and the wiper arm assemblies 24 for translating rotational movement of the motor 30 into pivotal movement of the wiper arm 26 across the windshield 18. The linkage assembly 32 includes a pivot shaft assembly, generally indicated at 34.

The pivot shaft assembly 34 is adapted to operatively receive one end of the wiper arm 26. Accordingly, the number of pivot shaft assemblies 34 corresponds to the number of wiper arms 26 within the system 20. The linkage assembly 32 may further include a drive arm 36 operatively attached to the pivot shaft assembly 34 corresponding to the driver's side wiper arm 26 through a crank 38 of the pivot shaft assembly. It should be appreciated that, in the embodiment illustrated, the linkage assembly 32 may further include a passenger arm 40 operatively attached to the pivot shaft assembly 34 corresponding to the passenger's side wiper arm 26 through a crank 38 to power the passenger's side wiper assembly 24.

The linkage assembly 32 also includes a unitizing or cross tube 42 extending between the pivot shaft assemblies 34 corresponding to the driver and passenger side wiper arms 26. The electrical wiper motor 30 is generally known in the art and is typically employed to power the wiper system 20 to move the windshield wiper assemblies 22 in an oscillating manner across the surface of the windshield 18.

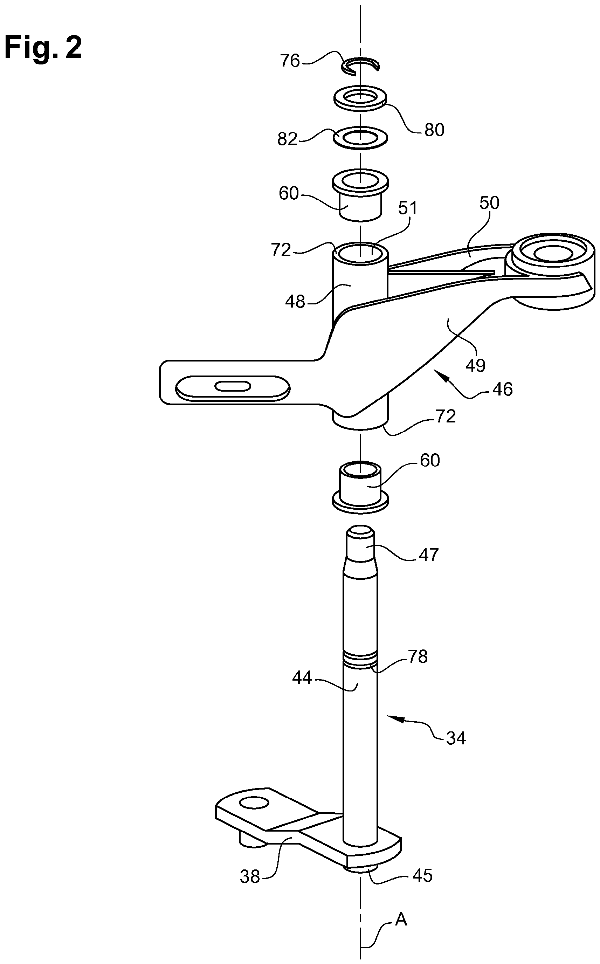

Referring to figure 2, the pivot shaft assembly 34 includes a pivot shaft, generally indicated at 44, and a pivot housing assembly, according to the present invention and generally indicated at 46, through which the pivot shaft 44 is guided.

The pivot shaft 44 has a main axis "A" which is oriented vertically on the figure 2. The pivot shaft 44 includes a base portion 45, shown at the bottom of the figure 3, which is mounted to the crank 38. The pivot shaft 44 further includes a pivot head 47 that is adapted to engage a portion of the wiper arm 26. The orientation of the pivot shaft 44 relative to the pivot housing assembly 46 is adapted to provide rotational movement of the pivot shaft 44 around its main axis "A" within the pivot housing assembly 46 to direct the wiper arm 26 in an oscillating manner across the windshield 18.

Specifically, the pivot housing assembly 46 comprises a pivot housing 49 which remains stationary, fixed to the unitizing tube 42. As the drive arm 36 actuates the crank 38, the pivot shaft 44 rotates within the pivot housing assembly 46, thereby moving the wiper arm 26. The pivot shaft 44 is made of a metallic material and has a generally circular cross-sectional shape.

The pivot housing 49 includes a sleeve portion 48 extending axially and comprising a through bore 51 to receive the pivot shaft 44 therein. The pivot housing 49 also includes a bracket portion 50 extending outwardly from the sleeve portion 48 to operatively secure the linkage assembly 32 to the vehicle 10. The bracket portion 50 is used to engage a portion of the vehicle 10. More specifically, the bracket portion 50 is adapted to be operatively attached to a portion of a vehicle in an under-mount manner. As shown on the figure 1, the bracket portion 50 is adapted to be operatively secured to the underside of a transversely extending portion of the body of a vehicle 10. However, those having ordinary skill in the art will appreciate that the bracket portion 50 may be operatively attached to any portion of the vehicle 10. By way of example, the bracket portion 50 may be attached to a portion of the engine plenum (not shown).

The bore 51 of the sleeve portion 48 is radially delimited by an internal face 52 which is globally cylindrical and circular in cross-sectional shape. The bore 51 presents a main central axis "A" which coincides with the main axis of the pivot shaft 44 when inserted in the bore 51.

At least the sleeve portion 48 is made of a material which may be easily cast or formed by molding, for instance a thermoplastic or thermoset resin, possibly with a filler such as glass fiber. Alternatively, the sleeve portion 48 may be fabricated from a lightweight non-ferrous metal such as aluminium or zinc, (although ferrous metals may also be suitable in certain applications). Preferably, the pivot housing 49 is made in one piece from the same material as the sleeve portion 48.

The internal face 52 of the bore 51 is divided in two convergent sections 52A, 52B extending from each end towards the other end of the bore 51.

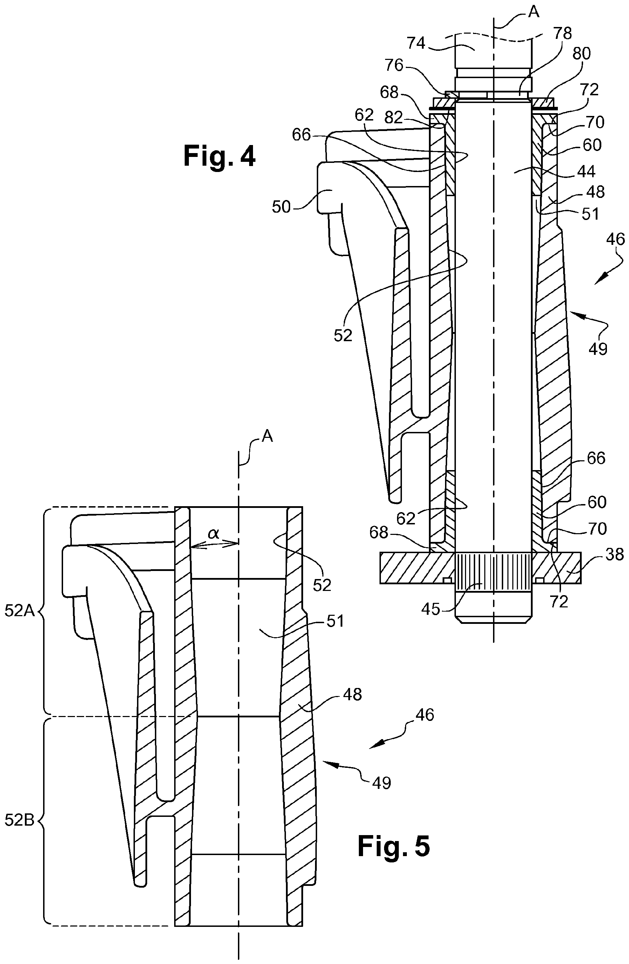

More particularly, the sleeve portion 48 of the pivot housing 49 is realized by a casting or molding process. The internal face 52 of each convergent section 52A, 52B of the bore 51 presents a draft angle α directly issued from the casting or molding process. The draft angle α is defined with respect to the main axis of the bore as indicated in figure 5. For instance the draft angle has a value comprised between 0,5° and 2°, for example 1°; it shall therefore be noted that the draft angle has been exaggerated for clarity in the accompanying figures.

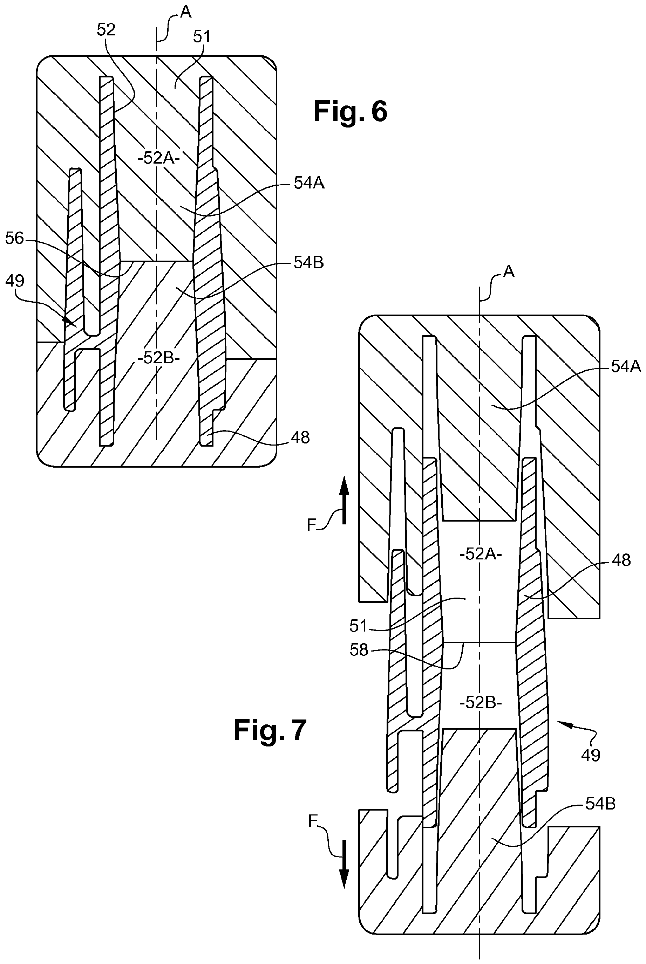

As illustrated on figures 6 and 7, during the molding process, the bore 51 is obtained by two mold sections 54A, 54B extending axially inside the bore 51 and meeting along a parting line 56. The mold sections 54A, 54B extends axially to meet midway of the bore 51 length. Each mold section 54A, 54B presents a draft angle α allowing the ejection of the mold sections 54A, 54B axially from the bore 51, as illustrated by the arrows "F" on the figure 7. Due to the molding process, the convergent sections 52A, 52B of the internal face 52 of the bore 51 meets each other in the bore 51 along the transverse parting line 56, for example at midway of the bore 51. A witness mark 58 generally occurs on the internal face 52 along the parting line 56.

Referring back to figures 2 and 4, two bushings 60 are received in the two axial ends of the through bore 51. The pivot shaft 44 is intended to be journaled in the bushings 60. For this purpose, each bushing 60 has an internal guiding face 62 presenting a right circular cylindrical shape parallel to the main axis "A" as indicated by the radial line 64 which is simultaneously perpendicular to the main axis "A" and to the internal guiding face 62. The pivot shaft 44 is fitted in the bushings 60 with a radial clearance allowing the rotation of the pivot shaft 44 in the bushings 60.

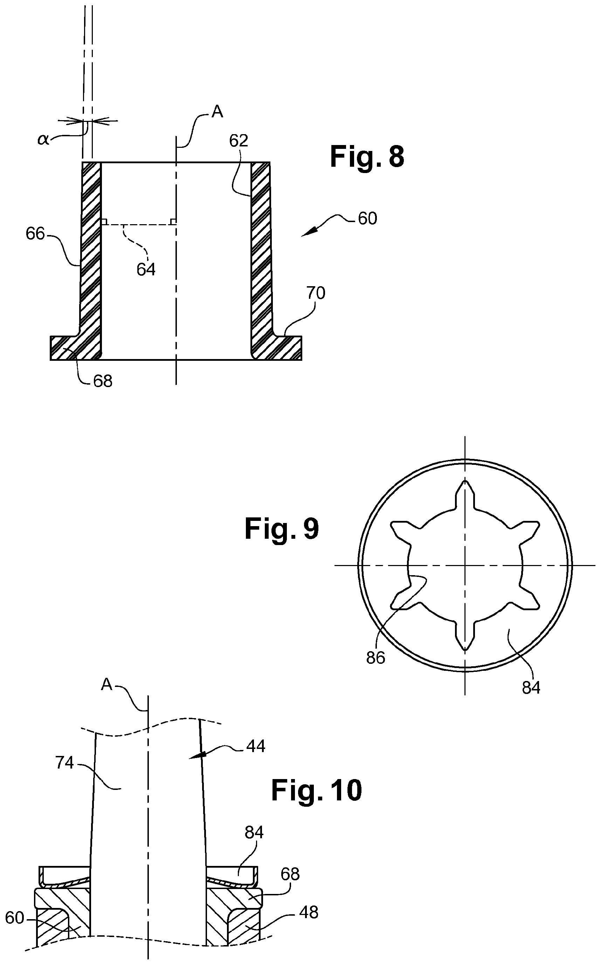

According to the invention, no machining operation is realized on the internal face 52 of the bore 51 after its molding and before the insertion of the bushings 60 in the bore 51. Each bushing 60 presents a tapered external face 66 matching the convergent shape of the associated section of the bore 51. As showed on the figure 8, the external face 66 of the bushing 60 thus presents an angle α in relation to the main axis "A" which is equal to the draft angle α of the associated convergent section 52A, 52B.

Each bushing 60 is fabricated from a molded plastic material, by *e.g.* an injection-molding or sintering process, in a form that is substantially finalized. Consequently, no further shaping, forming, or other such machining operation upon the bushings 60 is required prior to their insertion into the bore 51 of the sleeve portion 48 of the pivot housing 49.

By way of example, the bushings 60 may be fabricated from a thermoplastic or thermoset resin such as PTFE, POM (aka "acetal"), polyimide, nylon, or other suitable resin compositions. Optionally, the resin may incorporate additives to improve the physical properties of the bushings 60, for instance graphite to reduce friction.

Of course, more traditional bushing compositions, such as bronze may also be contemplated.

Advantageously it is provided that each bushing 60 has a flange 68 at one end which bears an annular thrust face 70 against an axial end face 72 of the sleeve portion 48. The external diameter of the flange 72 is greater than the internal diameter of the end of the bore 51. Thus the flanges 68 stay outward of the sleeve portion 48. As will be explained in detail, the flanges 72 can replace washer which are traditionally arranged in the wiper systems.

Preferably, the bushings 60 are fitted in the bore 51 with a radial clearance allowing the bushings 60 to rotate around the main axis "A" of the bore 51 in relation to the sleeve portion 49. In this way, even if for some reason one bushing 60 is stuck on the pivot shaft 44, the bushing 60 and the pivot shaft 44 can still rotate with respect to the sleeve portion 48.

Alternatively, the bushings are fixed inside the bore by interference fitting with the internal face.

As showed on the figure 4, the pivot shaft 44 is inserted in the bore 51 and journaled in the bushings 60. The crank 38 is coupled to the base portion 45 of the pivot shaft 44 projecting outward of the bore 51. The crank 38 abuts axially against the flange 68 of the adjacent bushing 60 to block the axial displacement of the pivot shaft 44 in a first direction, here upward, relative to the sleeve portion 48. Thanks to the flange 68 of the bushing 60, no additional washer is required between the crank 38 and the sleeve 48 to avoid the friction of the crank against the sleeve.

A second end section 74 of the pivot shaft 44, here an upper section, projects outward of the bore 51. This second end section 74 of the pivot shaft 44 is coupled to the wiper arm 24. Generally, the crank 38 is fixed to the pivot arm before its insertion in the bore 51, while the wiper arm 24 is fixed on the pivot shaft 44 after its insertion in the bore 51.

According to a first embodiment of the invention showed on the figures 2 and 4, the axial displacement of the pivot shaft 44 in a second direction, here downward, relative to the sleeve portion 48 is blocked by a circlip 76 (also known as a "snap ring," or "c-clip") which is received into a groove 78 of the pivot shaft 44. A flat washer 80 is interposed between the circlip 76 and the flange 68 of adjacent bushing 60. Moreover, a spring washer 82 is axially interposed between the flange 68 of the adjacent bushing 60 and the washer 80 in order to maintain axially the pivot shaft 44 in position despite a positioning tolerance of the groove 78.

According to a second embodiment of the invention illustrated on figures 9 and 10, an internally-serrated push-on lock washer 84 is arranged around the pivot shaft 44 directly next to the flange 68 of the adjacent bushing 60. The lock washer 84 (which may also be referred to as a starlock washer, grifaxe retaining ring, push-nut, etc.) is blocked axially with respect of the pivot shaft 44 by friction of the serrated portion 86 directly with the cylindrical external face of the pivot shaft 44 anywhere on the pivot shaft 44. No groove is required to block the lock washer 84 axially on the pivot shaft 44. With this arrangement no additional washer are required to block the axial displacement of the pivot shaft 44 in the second direction because it can be arranged directly against the flange 72 of the bushing 60.

The invention allows saving cost by suppressing the machining operation of the internal face of the bore compared to the pivot housing already known in the art.

Moreover, since the bushings are made in plastic by a molding process, they are provided with a flange that can advantageously replace at least one separate washer. The mounting of the pivot housing assembly is thus faster and less expensive.

## Claims

1. Pivot housing assembly (46), particularly for a windshield wiper system (20), comprising:
- a pivot housing (49) having a sleeve portion (48) comprising a through bore (51) in which a pivot shaft (44) is intended to be inserted, the bore (51) having a main axis (A) and an internal face (52) ;
- two bushings (60) which are received in the two axial ends of the through bore (51) and in which the pivot shaft (44) is intended to be journaled, each bushing (60) having an internal guiding face (62) presenting a right circular cylindrical shape parallel to the main axis (A) ;
**characterized in that** the internal face (52) of the bore (51) presents two convergent sections (52A, 52B) extending from each end towards the other end of the bore (51), each bushing (60) presenting a tapered external face (66) matching the convergent shape of the associated convergent section (52A, 52B) of the bore (51).

2. Pivot housing assembly (46) according to claim 1, **characterized in that** each bushing (60) have a flange (68) at one end which forms a thrust face (70) against an axial end face (72) of the sleeve portion (48).

3. Pivot housing assembly (46) according to any one of the previous claims, **characterized in that** the bushing (60) is made of plastic material.

4. Pivot housing assembly (46) according to any one of the previous claims, **characterized in that** the sleeve portion (48) is realized by a molding process, the internal face (52) of each convergent section (52A, 52B) of the bore (51) presenting a draft angle (α) directly issued from the molding process.

5. Pivot housing assembly (46) according to any one of the previous claims, **characterized in that** the convergent sections (52A, 52B) of the internal face (52) of the bore (51) meet each other in the bore (51).

6. Pivot housing assembly (46) according to any one of the previous claims, **characterized in that** at least the sleeve portion (48) is fabricated from a thermoplastic or thermoset resin material, aluminium, or zinc.

7. Pivot housing assembly (46) according to any one of the claims 5 or 6, **characterized in that** the pivot housing (49) is made in one piece.

8. Wiper system (20) comprising a pivot housing assembly (46) according to any one of the claims 1 to 7, **characterized in that** it comprises a pivot shaft (44) which is inserted in the bore (51) and journaled in the bushings (60), a crank (38) being coupled to a first end section (45) of the pivot shaft (44) projecting outward of the bore (51), while the other end (74) of the pivot shaft (44) is coupled to a wiper arm (24), the crank (38) abutting axially against the flange (68) of the adjacent bushing (60) to block the axial displacement of the pivot shaft (44) in a first direction relative to the sleeve portion (48).

9. Wiper system (20) according to the previous claim, **characterized in that** a second end section (74) of the pivot shaft (44) projects outward of the bore (51), the second end section (74) comprising a washer (80, 84) which is fastened axially to the pivot shaft (44) to block the axial displacement of the pivot shaft (44) in a second direction relative to the sleeve portion (48).

10. Wiper system (20) according to the previous claim, **characterized in that** the washer (80) is fastened to the pivot shaft (44) by a circlip (76), the washer (80) being interposed between the circlip (76) and the flange (72) of the adjacent bushing (60), a spring washer (82) being axially interposed between the flange (68) of the adjacent bushing (60) and the washer (80).

11. Wiper system (20) according to the claim 9, **characterized in that** the washer is a lock washer (84) internally serrated which is arranged directly next to the flange (68) of the adjacent bushing (60).

12. Method for manufacturing a pivot housing assembly according to any one of the claims 4 to 7, **characterized in that** the pivot housing (49) is realized by a molding process during which the bore (51) is obtained by two mold sections (54A, 54B) inserted axially inside the bore (51), the mold sections (54A, 54B) presenting a draft angle (α) allowing the ejection of the mold sections (54A, 54B) axially from the bore (51), no machining operation being realized on the internal face (52) of the bore (51) before the insertion of the bushings (60) in the bore (51).
